# EUROPEAN PATENT APPLICATION

(11) **EP 2 756 910 A1**
(43) Date of publication of application: **23.07.2014**
(21) Application number: 12831419.2
(22) Date of filing: 13.09.2012
(51) Int. Cl.: B23K 20/00, H01R 43/02, B23K 20/10, B23K 20/12

(54) **METAL CONNECTION METHOD**

(30) Priority: 13.09.2011 JP 2011199492
(71) Applicant: Yazaki Corporation, Tokyo 108-0073 (JP)
(72) Inventor: TAKADA, Kazuhiko, Makinohara-shi Shizuoka 421-0407 (JP)
(74) Representative: HOFFMANN EITLE
(86) International application number: PCT/JP2012/073434
(87) International publication number: WO 2013/039138

(57) **Abstract**

Disclose is a metal connection method comprising the steps of: holding a connection part of a first metal member and a connection part of a second metal member facing each other; deforming the connection parts by applying pressure to the connection parts with the connection parts butted each other to thereby remove oxide films of the connection parts; and connecting to each other the connection part of the first metal member and the connection part of the second metal member from which the oxide films were removed by means of diffusion connection. As a result, cost is easily reduced and quality can be stably ensured.

## Description

### Technical Field

The present invention relates to a connection method and, in particular, to a metal connection method for connecting a conducting wire and a metal plate material, a metal plate material and a metal plate material, or a conducting wire and a conducting wire without heating them.

### Background Art

Conventionally, as a technology to connect metals, such as connection of a conducting wire and a metal plate material, there are included crimping connection, resistance welding, ultrasonic connection, soldering (brazing), etc. (for example, refer to Patent Literature 1).

Crimping connection is a mainstream as a technology to connect a copper twisted wire and a copper plate material. However, the crimping connection has such problems that component cost is high, quality assurance requires much cost, etc. Resistance welding is used as a technology to connect metals, such as a copper twisted wire and a copper plate material. However, the resistance welding has such problems that process cost is high, aluminum connection support is difficult, connection quality is unstable, quality assurance is difficult, etc. Ultrasonic connection has such problems that process cost is high since equipment cost etc. are high, an adaptive range of an adaptive electric wire cross section is narrow, etc. Soldering has such problems that an insert metal is needed, thereby component cost becomes high, a connection strength is weak, quality assurance is difficult, etc.

### Citation List

### Patent Literature

[PTL 1]
Japanese Patent Application Laid-Open Publication No. 2004-311061

### Summary of Invention

### Technical Problem

The present invention has been made in view of the above-described real circumstances, and has an object to provide a metal connection method that easily reduces cost and can assure stable quality.

### Solution to Problem

According to one aspect of the present invention, provided is a metal connection method including the steps of: holding a connection part of a first metal member and a connection part of a second metal member with the connection parts facing each other; deforming the connection part of the first metal member and the connection part of the second metal member by applying pressure to the connection part of the first metal member and the connection part of the second metal member with the connection parts butted each other to thereby remove oxide films of the connection part of the first metal member and the connection part of the second metal member; and connecting to each other the connection part of the first metal member and the connection part of the second metal member from which the oxide films have been removed by means of diffusion connection.

### Advantageous Effects of Invention

According to the present invention, it is possible to provide a metal connection method that easily reduces cost and can assure stable quality.

### Brief Description of Drawings

[Fig. 1]

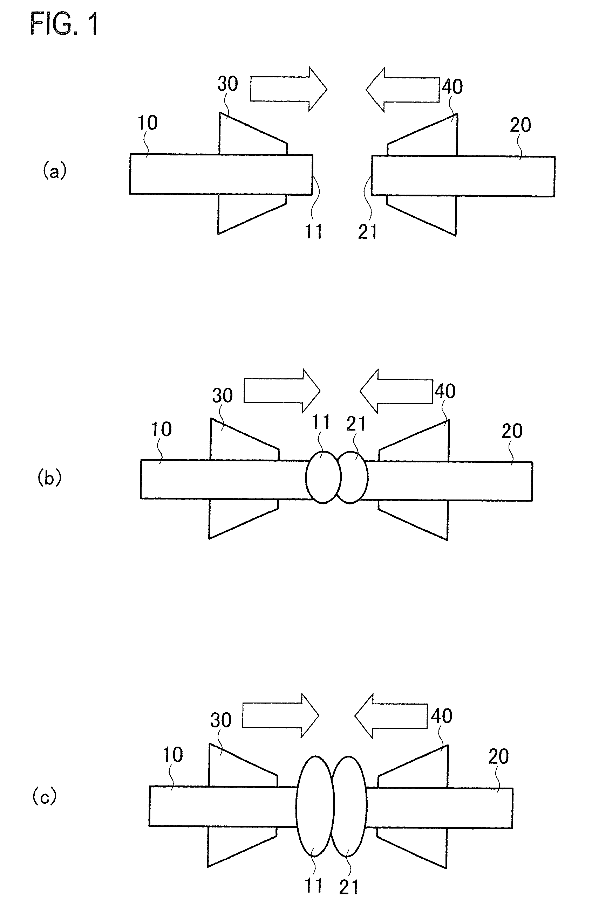

   Figs. 1(a) to 1(c) are schematic process diagrams showing a metal connection method according to a first embodiment of the present invention.
[Fig. 2]

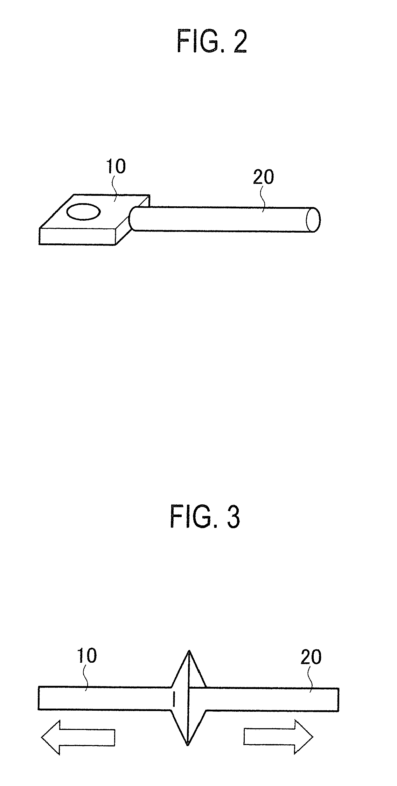

   Fig. 2 is a schematic diagram of a metal connection member connected by means of the metal connection method according to the first embodiment of the present invention.
[Fig. 3]
   Fig. 3 is a schematic diagram of a metal connection member for verifying connection strengths of the metal connection method according to the first embodiment of the present invention.
[Fig. 4]

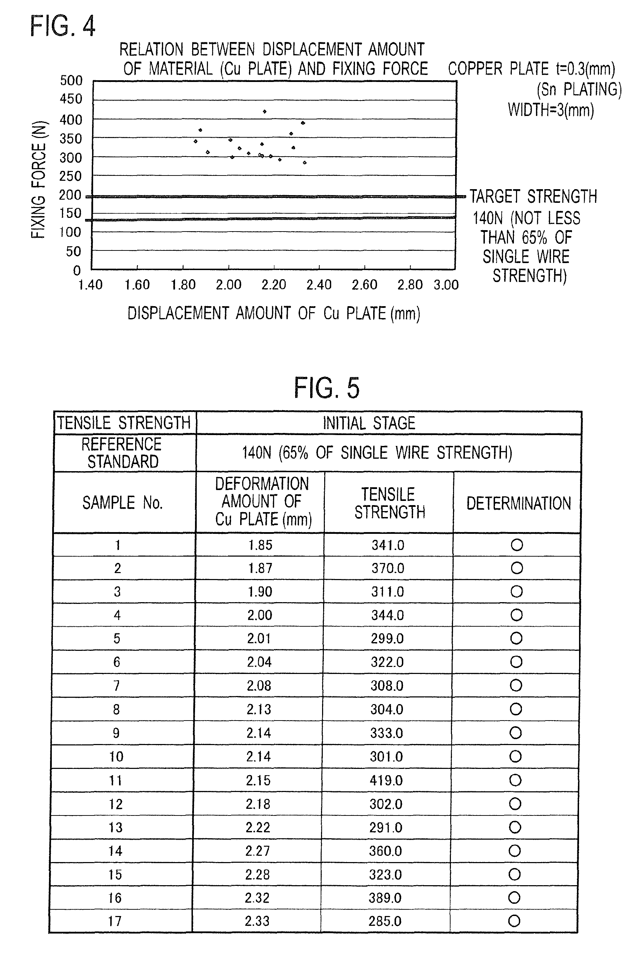

   Fig. 4 is a graph showing verification results of the connection strengths of the metal connection method according to the first embodiment of the present invention.
[Fig. 5]
   Fig. 5 is a table showing verification results of the connection strengths of the metal connection method according to the first embodiment of the present invention.
[Fig. 6]

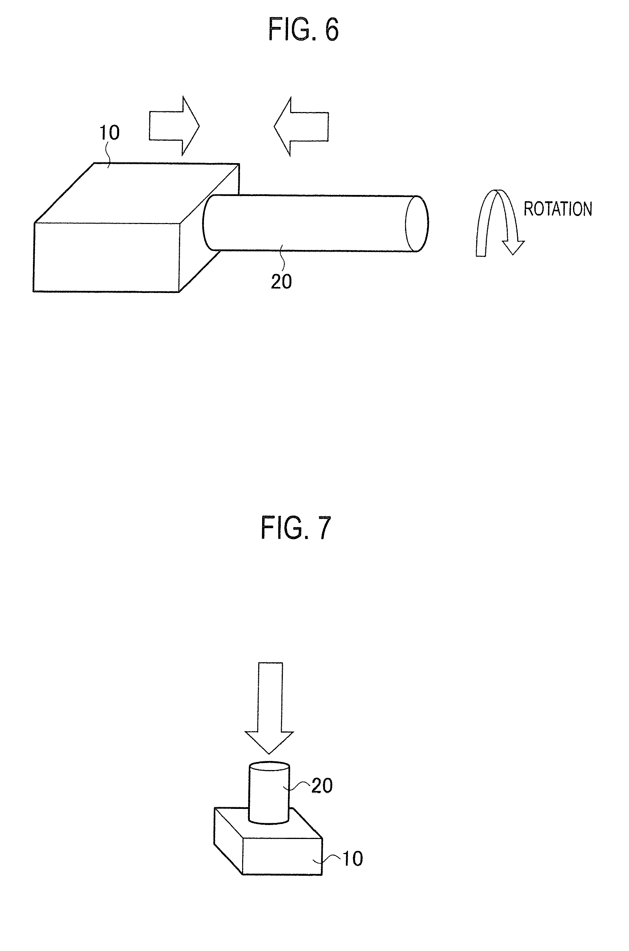

   Fig. 6 is a schematic diagram showing a metal connection method according to a second embodiment of the present invention.
[Fig. 7]
   Fig. 7 is a schematic diagram of a metal connection member for verifying connection strengths of the metal connection method according to the second embodiment of the present invention.
[Fig. 8]

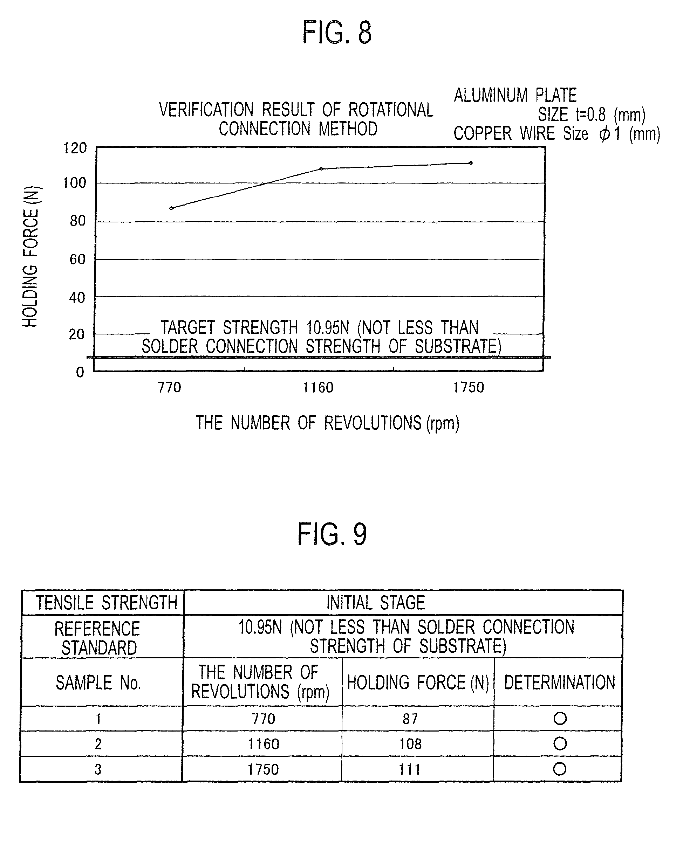

   Fig. 8 is a graph showing verification results of the connection strengths of the metal connection method according to the second embodiment of the present invention.
[Fig. 9]
   Fig. 9 is a table showing verification results of the connection strengths of the metal connection method according to the second embodiment of the present invention.
[Fig. 10]

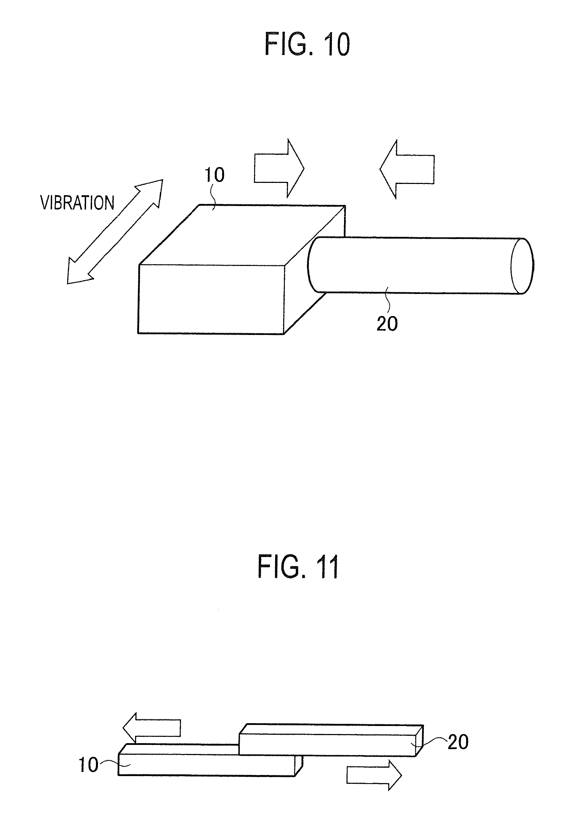

   Fig. 10 is a schematic diagram showing a metal connection method according to a third embodiment of the present invention.
[Fig. 11]
   Fig. 11 is a schematic diagram of a metal connection member for verifying connection strengths of the metal connection method according to the third embodiment of the present invention.
[Fig. 12]

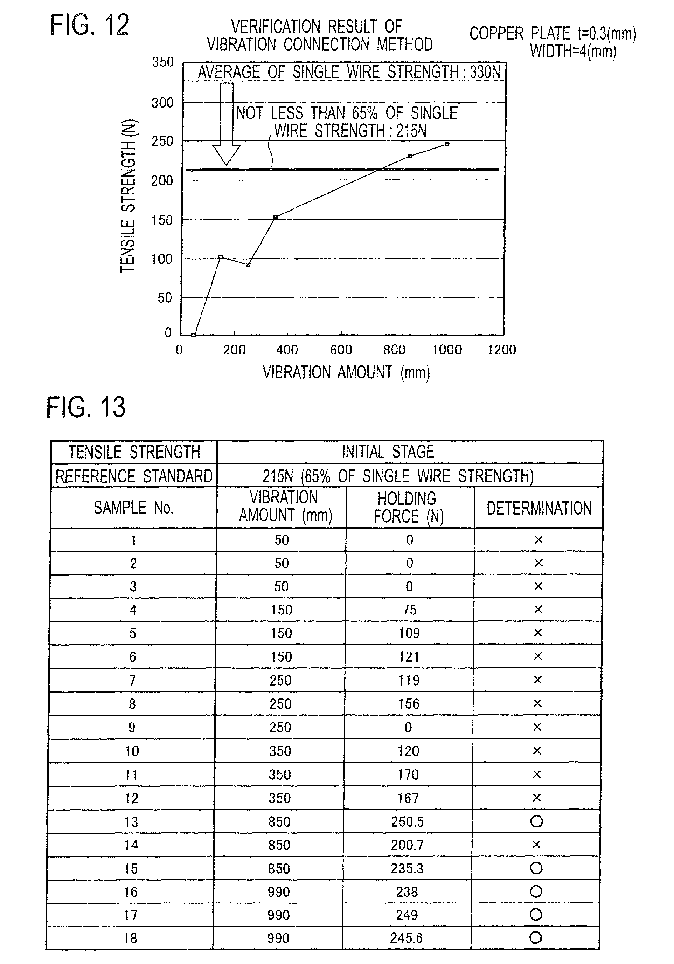

   Fig. 12 is a graph showing verification results of the connection strengths of the metal connection method according to the third embodiment of the present invention.
[Fig. 13]
   Fig. 13 is a table showing verification results of the connection strengths of the metal connection method according to the third embodiment of the present invention.

### Description of Embodiments

Hereinafter, embodiments of the present invention will be explained with reference to drawings. In the following description of the drawings, a same or a similar portion is represented by means of a same or a similar symbol. However, the drawings are schematically shown, and a relation between a thickness and a planar size, a ratio of thicknesses of respective layers, etc. differ from an actual thing. Accordingly, specific thicknesses and sizes should be determined in the light of the following explanation. In addition, portions in which a relation and a ratio of mutual sizes differ are included also in the mutual drawings.

### (First embodiment)

A metal connection method (upset connection method) according to a first embodiment of the present invention, as shown in Figs. 1(a) to 1(c), includes the steps of: holding a connection part 11 of a first metal member 10 and a connection part 21 of a second metal member 20 with the connection parts facing each other (Fig. 1(a)); deforming the connection part 11 of the first metal member 10 and the connection part 21 of the second metal member 20 by applying pressure to the connection part 11 of the first metal member 10 and the connection part 21 of the second metal member 20 with the connection parts butted each other to thereby remove oxide films of the connection part 11 of the first metal member 10 and the connection part 21 of the second metal member 20 (Fig. 1(b)); and connecting to each other the connection part 11 of the first metal member 10 and the connection part 21 of the second metal member 20 from which the oxide films have been removed by means of diffusion connection (Fig. 1(c)).

Diffusion connection is a method in which under a temperature condition not more than a melting point, exposed unoxidized metals are mutually made close enough for an atomic force to act, and are connected utilizing diffusion of atoms generated on a connection surface. In the metal connection method according to the first embodiment, the first metal member 10 and the second metal member 20 are held by holding parts 30 and 40, and pressurized. Heating and vibration application are not performed in the metal connection method according to the first embodiment.

Each of the first metal member 10 and the second metal member 20 is a twisted wire that is a cable having a core wire in which fine conducting wires have been twisted, a metal plate material, such as aluminum and copper, or a circuit body formed of a single wire, foil, a plate material, etc. made of aluminum, copper or the like. As for the first metal member 10 and the second metal member 20, for example, as shown in Fig. 2, the first metal member 10 is a terminal formed of a metal plate material etc., and the second metal member 20 is a conducting wire that is a copper twisted wire.

Shown is verification of connection strengths of the metal connection method according to the first embodiment. The first metal member 10 and the second metal member 20 that were used for verification are, as shown in Fig. 3, carriers of metal plate terminals formed of copper. As a verification method, verified is a relation between a displacement amount of a copper plate due to pressurization for connection and a fixing force required in respectively pulling the first metal member 10 and the second metal member 20. Verification results are shown in a graph of Fig. 4. In addition, a target value of a connection strength (tensile strength) required in the metal connection method according to the first embodiment is set as 140 N, which is a value not less than 65% of a single body strength. In Fig. 5, shown are results of 17 samples pressurized so that the displacement amount of the copper plate due to the pressurization for connection was not less than 1.80 mm. From Figs. 4 and 5, it turns out that when pressure is applied so that the displacement amount of the copper plate due to the pressurization for connection is not less than 1.80 mm, the connection strength becomes not less than 140 N that is a target strength, and thus becomes not less than a standard value.

According to the metal connection method according to the first embodiment, it becomes possible to connect homogeneous metals and dissimilar metals since diffusion connection is performed by pressurization, and reduction of component cost can be achieved due to decrease of constraint of component materials.

In addition, according to the metal connection method according to the first embodiment, processes are simple, in-house production of equipment is realized, and process cost can be suppressed, whereby reduction of cost can be achieved.

In addition, according to the metal connection method according to the first embodiment, since there are no energy loads, such as heating and energization, a process time is short, which is economical.

In addition, according to the metal connection method according to the first embodiment, quality can be assured by managing a pressurizing force, a deformation amount, etc.

In addition, according to the metal connection method according to the first embodiment, quality can be assured by monitoring a management value (tensile strength etc.).

### (Second embodiment)

A metal connection method (rotational connection method) according to a second embodiment of the present invention, as shown in Fig. 6, differs as compared with the metal connection method according to the first embodiment in a point where the first metal member 10 is held and the second metal member 20 is rotated in the step of removing the oxide films. Since the other points are substantially similar, overlapping description is omitted.

In the step of removing the oxide films, by holding the first metal member 10 and rotating the second metal member 20, deformation of a material occurs in a rotation part (connection part), the oxide films are removed, and diffusion connection is performed.

Shown is verification of connection strengths of the metal connection method according to the second embodiment. The first metal member 10 used for verification is, as shown in Fig. 7, a metal plate formed of aluminum, and the second metal member 20 is a twisted wire formed of copper. As a verification method, verified is a relation between the number of revolutions at the time of connection and holding forces of the first metal member 10 and the second metal member 20. Verification results are shown in a graph of Fig. 8. In addition, a target value of a connection strength (holding force) required in the metal connection method according to the second embodiment is set as 10.95 N, which is not less than a solder connection strength of a substrate. In Fig. 9, shown are results of three samples in which the number of revolutions at the time of connection is not less than 770 rpm. From Figs. 8 and 9, it turns out that when the number of revolutions at the time of connection is set to be not less than 770 rpm, the connection strength significantly exceeds 10.95 N, which is a target strength, and thus becomes not less than a standard value.

According to the metal connection method according to the second embodiment, it becomes possible to connect homogeneous metals and dissimilar metals since diffusion connection is performed by pressurization and rotation, and reduction of component cost can be achieved due to decrease of constraint of component materials.

In addition, according to the metal connection method according to the second embodiment, processes are simple, in-house production of equipment is realized, and process cost can be suppressed, whereby reduction of cost can be achieved.

In addition, according to the metal connection method according to the second embodiment, since there are no energy loads, such as heating and energization, a process time is short, which is economical.

In addition, according to the metal connection method according to the second embodiment, quality can be assured by managing a pressurizing force, a deformation amount, the number of revolutions, etc.

In addition, according to the metal connection method according to the second embodiment, quality can be assured by monitoring a management value (holding force etc.).

### (Third embodiment)

A metal connection method (vibration connection method) according to a third embodiment of the present invention, as shown in Fig. 10, differs as compared with the metal connection method according to the first embodiment in a point where the second metal member 20 is held and the first metal member 10 is vibrated vertically to a pressurizing direction in the step of removing the oxide films. Since the other points are substantially similar, overlapping description is omitted.

In the step of removing the oxide films, by holding the second metal member 20 and vibrating the first metal member 10, deformation of the material occurs in a vibration part (connection part), the oxide films are removed, and diffusion connection is performed.

Shown is verification of connection strengths of the metal connection method according to the third embodiment. The first metal member 10 and the second metal member 20 that were used for verification are, as shown in Fig. 11, metal plates formed of copper. As a verification method, verified is a relation between a vibration amount at the time of connection and a tensile strength required in respectively pulling the first metal member 10 and the second metal member 20. Verification results are shown in a graph of Fig. 12. In addition, a target value of a connection strength (tensile strength) required in the metal connection method according to the third embodiment is set as 215 N, which is a value not less than 65% of the single body strength. In Fig. 13, shown are results of 18 samples in which the vibration amount at the time of connection is not less than 50 mm. From Figs. 12 and 13, it turns out that when the number of revolutions at the time of connection is set to be not less than 990 mm, the connection strength becomes not less than 215 N that is a target strength, and thus becomes not less than a standard value.

According to the metal connection method according to the third embodiment, it becomes possible to connect homogeneous metals and dissimilar metals since diffusion connection is performed by pressurization and vibration, and reduction of component cost can be achieved due to decrease of constraint of component materials.

In addition, according to the metal connection method according to the third embodiment, processes are simple, in-house production of equipment is realized, and process cost can be suppressed, whereby reduction of cost can be achieved.

In addition, according to the metal connection method according to the third embodiment, since there are no energy loads, such as heating and energization, a process time is short, which is economical.

In addition, according to the metal connection method according to the third embodiment, quality can be assured by managing a pressurizing force, a deformation amount, a vibration amount, etc.

In addition, according to the metal connection method according to the third embodiment, quality can be assured by monitoring a management value (tensile strength etc.).

### (Other embodiments)

As described above, although the present invention has been described by the embodiments, it should not be understood that description and the drawings that form a part of this disclosure limit the present invention. Various alternative embodiments, working examples, and operational technologies should be apparent for those skilled in the art from this disclosure.

For example, the metal materials as the first metal member 10 and the second metal member 20 that have been shown in the embodiments are one example, and the other metal materials used for various conducting wires, circuits, etc. may be employed.

As described above, it should be understood that the present invention encompasses various embodiments etc. that have not been described herein. Accordingly, the present invention is limited only by matters specifying the invention of appropriate claims from this disclosure.

### Reference Signs List

- 10: First metal member
- 20: Second metal member
- 11, 21: Connection part
- 30, 40: Holding part

## Claims

1. A metal connection method comprising the steps of:
holding a connection part of a first metal member and a connection part of a second metal member with the connection parts facing each other;
deforming the connection part of the first metal member and the connection part of the second metal member by applying pressure to the connection part of the first metal member and the connection part of the second metal member with the connection parts butted each other to thereby remove oxide films of the connection part of the first metal member and the connection part of the second metal member; and
connecting to each other the connection part of the first metal member and the connection part of the second metal member from which the oxide films have been removed by means of diffusion connection.

2. The metal connection method according to claim 1, wherein in the step of removing the oxide films, the first metal member is held, and the second metal member is rotated.

3. The metal connection method according to claim 1, wherein in the step of removing the oxide films, the second metal member is held, and the first metal member is vibrated vertically to a pressurizing direction.
